# EUROPÄISCHE PATENTSCHRIFT

(11) **EP 4 037 931 B1**
(45) Veröffentlichungstag und Bekanntmachung des Hinweises auf die Patenterteilung: **10.07.2024**
(21) Anmeldenummer: 20790207.3
(22) Anmeldetag: 02.10.2020
(51) Int. Cl.: B60N 2/06

(54) **LÄNGSEINSTELLER FÜR EINEN FAHRZEUGSITZ UND FAHRZEUGSITZ**
LENGTH ADJUSTER FOR A VEHICLE SEAT AND VEHICLE SEAT
SYSTÈME DE RÉGLAGE LONGITUDINAL POUR SIÈGE DE VÉHICULE ET SIÈGE DE VÉHICULE

(30) Priorität: 02.10.2019 DE 102019126661; 05.02.2020 DE 102020102867
(43) Veröffentlichungstag der Anmeldung: 10.08.2022
(73) Patentinhaber: Adient US LLC, Plymouth, MI 48170 (US)
(72) Erfinder: GREGOR, Peter, 91311 Trencianske Stankovce (SK); SCHUERMANN, Thorsten, 51519 Odenthal (DE); SPRENGER, Erik, 42929 Wermelskirchen (DE)
(74) Vertreter: Liedtke & Partner Patentanwälte
(86) Internationale Anmeldenummer: PCT/EP2020/077671
(87) Internationale Veröffentlichungsnummer: WO 2021/064181

(56) Entgegenhaltungen:
- US-A1- 2008 105 810
- US-A1- 2014 339 392
- US-A1- 2019 143 847

## Beschreibung

Die Erfindung betrifft einen Längseinsteller für einen Fahrzeugsitz, insbesondere Kraftfahrzeugsitz, aufweisend eine erste Schiene, eine in der ersten Schiene in einer Längsrichtung verschieblich geführte zweite Schiene, eine zwischen der ersten Schiene und der zweiten Schiene angeordnete Spindel, und ein antreibbares Getriebe, wobei das Getriebe mit einem Gewinde der Spindel in Eingriff ist und entlang der Spindel bewegbar ist, oder das Getriebe relativ zur Spindel ortsfest angeordnet ist und die Spindel mittels des Getriebes antreibbar ist, wobei das Getriebe mittels eines im Wesentlichen U-förmigen Getriebehalters an der zweiten Schiene befestigt ist und der Getriebehalter wenigstens zwei in Längsrichtung gegenüberliegend angeordnete Schenkel aufweist, wobei der Getriebehalter in einer die beiden Schenkel verbindenden und horizontal verlaufenden Basis wenigstens eine Ausnehmung aufweist, sowie einen Fahrzeugsitz.

### Stand der Technik

Aus der US 2008/0163708 A1 ist ein Längseinsteller für einen Fahrzeugsitz bekannt, aufweisend eine erste Schiene, eine in der ersten Schiene in einer Längsrichtung verschieblich geführte zweite Schiene, eine relativ zur ersten Schiene fixierte Spindel, und ein antreibbares Getriebe, welches mit einem Gewinde der Spindel in Eingriff ist und entlang der Spindel bewegbar ist, wobei das Getriebe mittels eines im Wesentlichen U-förmigen Getriebehalters an der zweiten Schiene befestigt ist und der Getriebehalter wenigstens zwei in Längsrichtung gegenüberliegend angeordnete Schenkel aufweist, wobei der Getriebehalter in einer die beiden Schenkel verbindenden und horizontal verlaufenden Basis wenigstens eine Ausnehmung aufweist.

Aus der WO 2019/030369 A1 ist ein Längseinsteller bekannt, bei welchem ein Getriebe in einem Getriebegehäuse angeordnet ist und mit einer Sitzschiene des Längseinstellers gekoppelt ist.

Aus der US 2008/0105810 A1 ist eine weitere Längsverstelleinheit für einen Sitz, insbesondere in einem Kraftfahrzeug, mit einer auf einer Spindel verfahrbaren Spindelmutter bekannt.

### Aufgabe

Der Erfindung liegt die Aufgabe zu Grunde, einen gegenüber dem Stand der Technik verbesserten Längseinsteller für einen Fahrzeugsitz und einen verbesserten Fahrzeugsitz bereitzustellen. Insbesondere wird ein Längseinsteller mit einem verbesserten Toleranzausgleich geschaffen.

### Lösung

Diese Aufgabe wird erfindungsgemäß gelöst durch einen Längseinsteller für einen Fahrzeugsitz, insbesondere Kraftfahrzeugsitz, aufweisend eine erste Schiene, eine in der ersten Schiene in einer Längsrichtung verschieblich geführte zweite Schiene, eine zwischen der ersten Schiene und er zweiten Schiene angeordnete Spindel, und ein antreibbares Getriebe, wobei das Getriebe mit einem Gewinde der Spindel in Eingriff ist und entlang der Spindel bewegbar ist, oder das Getriebe relativ zur Spindel ortsfest angeordnet ist und die Spindel mittels des Getriebes antreibbar ist, wobei das Getriebe mittels eines im Wesentlichen U-förmigen Getriebehalters an der zweiten Schiene befestigt ist und der Getriebehalter wenigstens zwei in Längsrichtung gegenüberliegend angeordnete Schenkel aufweist, wobei der Getriebehalter in einer die beiden Schenkel verbindenden und horizontal verlaufenden Basis wenigstens eine Ausnehmung aufweist, wobei ein das Getriebe umschließendes Getriebegehäuse wenigstens abschnittsweise in die wenigstens eine Ausnehmung hineinragt.

Dadurch, dass der Getriebehalter in einer die beiden Schenkel verbindenden und im Wesentlichen horizontal verlaufenden Basis wenigstens eine Ausnehmung aufweist und ein das Getriebe umschließendes Getriebegehäuse wenigstens abschnittsweise in die wenigstens eine Ausnehmung hineinragt, ist es ermöglicht, den durch die Ausnehmung definierten zusätzlichen freien Bauraum für das Getriebegehäuse zu nutzen und/oder zur Toleranzkompensation zu verwenden.

Vorteilhafte Ausgestaltungen, welche einzeln oder in Kombination miteinander eingesetzt werden können, sind Gegenstand der Unteransprüche.

Gemäß einer ersten Variante des Längseinstellers, insbesondere mit feststehender Spindel, kann das Getriebe mit einem Gewinde der Spindel in Eingriff sein und entlang der Spindel bewegbar sein. Hierbei kann die Spindel mittels wenigstens eines Spindelhalters, bevorzugt zweier Spindelhalter, relativ zur ersten Schiene drehfest gehalten sein. Das Getriebe kann eine mittels eines Motors antreibbare Schnecke aufweisen. Das Getriebe kann abtriebsseitig ein mittels der Schnecke antreibbares und mit der Spindel zusammenwirkendes Schneckenrad aufweisen. Das Getriebe des Längseinstellers kann in einem in Längserstreckungsrichtung mittigen Bereich der zweiten Schiene angeordnet sein. Das Schneckenrad kann ein Innengewinde aufweisen, welches mit einem Außengewinde der Spindel zusammenwirkt. Zur Erzeugung einer Relativbewegung der ersten Schiene relativ zur zweiten Schiene kann es gemäß der ersten Variante des Längseinstellers vorgesehen sein, dass das beispielsweise an der zweiten Schiene gehaltene Getriebe entlang der beispielsweise an der ersten Schiene fixierten Spindel bewegbar ist.

Gemäß einer zweiten Variante des Längseinstellers, insbesondere mit drehbar antreibbarer Spindel, kann das Getriebe relativ zur Spindel ortsfest angeordnet sein und die Spindel mittels des Getriebes antreibbar sein. Hierbei kann die Spindel im Bereich eines Endes der Spindel in dem Getriebe gelagert sein. Die Spindel kann im Bereich eines dem Getriebe fernen Endes mittels eines Drehlagers gelagert sein. Das Getriebe kann eine mittels eines Motors antreibbare Schnecke aufweisen. Das Getriebe kann abtriebsseitig ein mittels der Schnecke antreibbares und mit der Spindel zusammenwirkendes Schneckenrad aufweisen. Das Getriebe des Längseinstellers kann in einem Bereich eines vorderen oder hinteren Endes der zweiten Schiene angeordnet sein. Der Längseinsteller kann eine ein Innengewinde aufweisende Spindelmutter aufweisen. Die Spindelmutter kann an der ersten Schiene fixiert sein. Die Spindelmutter kann mittels ihres Innengewindes mit einem Außengewinde der Spindel zusammenwirken. Die Spindel ist hierbei ortsfest relativ zum Getriebe angeordnet und mittels des Getriebes antreibbar.

Zur Erzeugung einer Relativbewegung der ersten Schiene relativ zur zweiten Schiene kann es gemäß der zweiten Variante des Längseinstellers vorgesehen sein, dass eine beispielsweise an der ersten Schiene fixierte Spindelmutter entlang der beispielsweise an der relativ zur zweiten Schiene gelagerten und mittels des Getriebes antreibbaren Spindel bewegbar ist.

Unabhängig der nachfolgend explizit beschriebenen Ausführungsbeispiele, sind die beschriebenen Getriebehalter und Getriebe in einem Längseinsteller gemäß der ersten oder zweiten Variante einsetzbar und somit von der Erfindung ausdrücklich umfasst.

Die Ausnehmung kann in ihren Randbereichen durch vertikal verlaufende Wandabschnitte begrenzt sein. Die Ausnehmung kann ausschließlich durch vertikal verlaufende Wandabschnitte begrenzt sein. Das Getriebegehäuse kann bis in einen Bereich mit vertikalen Wandabschnitten in die Ausnehmung der Basis eintreten. Das Getriebegehäuse kann bis zu einer Unterkante der Ausnehmung durch die Basis hindurchtreten. In Vertikalrichtung oberhalb der äußeren Bereiche der Basis ist zwischen der Basis und dem Getriebegehäuse oder zwischen der Basis und gegebenenfalls vorgesehenen Puffern ein Spalt vorgesehen. Der Spalt kann einem Toleranzausgleich dienen.

Die Schenkel können im Bereich der wenigstens einen Ausnehmung jeweils einen Abschnitt aufweisen. Die Abschnitte können freigestanzt sein. Die Abschnitte können einen geraden Verlauf relativ zum jeweiligen Schenkel aufweisen. Die Abschnitte können einen Winkel von 90° relativ zur Basis aufweisen. Hierdurch wird die Ausnehmung nicht derart von einem Biegeradius im Übergangsbereich zwischen einem Schenkel und jeweils der Basis verkleinert, dass der Biegeradius eine Aufnahme des das Getriebe umschließenden Getriebegehäuses in der wenigstens einen Ausnehmung begrenzt oder beeinflusst.

Das Getriebegehäuse kann zwei Gehäuseteile aufweisen. Die zwei Gehäuseteile können senkrecht zur Axialrichtung der Spindel miteinander fixierbar sein.

Zwei Puffer können parallel zur Axialrichtung der Spindel auf das Getriebegehäuse aufgesteckt sein, insbesondere um bei einem Lastwechsel auftretende Kontaktgeräusche mit dem Getriebehalter zu reduzieren. Die Puffer können aus Gummi gefertigt sein. Die Puffer können jeweils abschnittsweise in die wenigstens eine Ausnehmung hineinragen. Im Falle von zwei Ausnehmungen kann jeweils ein Puffer abschnittsweise in jeweils eine der Ausnehmungen hineinragen. Im Sinne der vorliegenden Erfindung werden die gegebenenfalls vorgesehenen Puffer nicht als Bestandteil des Getriebegehäuses angesehen.

Der Getriebehalter kann in der Basis zwei Ausnehmungen aufweisen. Die zwei Ausnehmungen können mittels eines Stegs voneinander getrennt sein. Der Steg kann in einem rechten Winkel windschief zu einer Drehachse der Spindel verlaufen.

Alternativ kann der Getriebehalter in der Basis genau eine Ausnehmung aufweisen und die Basis durch die Ausnehmung in zwei parallel verlaufende Brückenabschnitte unterteilt sein. Die Ausnehmung kann in Querrichtung durch die beiden Brückenabschnitte der Basis begrenzt sein.

Die Ausnehmung kann parallel zur Längsrichtung begrenzt sein. Die Basis kann zwei parallel verlaufende Brückenabschnitte, insbesondere parallel zur Längsrichtung orientierter Brückenabschnitte, aufweisen. Die wenigstens eine Ausnehmung kann in Querrichtung durch die beiden Brückenabschnitte der Basis begrenzt sein.

Die Basis kann an ihren, in Längsrichtung betrachtet, seitlichen äußeren Rändern je eine Fase aufweisen. Die Brückenabschnitte der Basis können an ihren, in Längsrichtung betrachtet, seitlichen äußeren Rändern je eine Fase aufweisen.

Ferner kann es vorgesehen sein, dass von den beiden Schenkeln jeweils ein im Wesentlichen vertikal abstehender Befestigungsabschnitt absteht. Der Getriebehalter kann mit den beiden Befestigungsabschnitten mit der zweiten Schiene verbindbar, insbesondere vernietbar, sein. Zur Befestigung des Getriebehalters an der zweiten Schiene können die Befestigungsabschnitte durch kooperierende Öffnungen in der zweiten Schiene hindurchführbar und auf einer dem Getriebegehäuse gegenüberliegenden Seite der zweiten Schiene durch Umformung vernietbar sein. Die beiden Schenkel des Getriebehalters können seitliche Vorsprünge aufweisen, welche in entsprechenden Ausnehmungen in vertikal verlaufenden Wandabschnitten der zweiten Schiene aufnehmbar sind.

Die der Erfindung zugrundeliegende Aufgabe wird ferner gelöst durch einen Fahrzeugsitz, insbesondere Kraftfahrzeugsitz, wobei der Fahrzeugsitz zur Einstellung einer Sitzlängsposition einen Längseinsteller gemäß der vorstehenden Beschreibung aufweist.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: schematisch einen erfindungsgemäßen Fahrzeugsitz,
- Fig. 2:: schematisch eine Explosionsdarstellung eines gattungsgemäßen Längseinstellers,
- Fig. 3:: eine perspektivische Darstellung eines Getriebehalters gemäß eines ersten Ausführungsbeispiels eines erfindungsgemäßen Längseinstellers,
- Fig. 4:: eine Ansicht von unten auf den Getriebehalter von Fig. 3 sowie ein in dem Getriebehalter angeordnetes Getriebe,
- Fig. 5:: eine Seitenansicht des Getriebehalters von Fig. 3 sowie das in dem Getriebehalter angeordnete Getriebe,
- Fig. 6:: eine Schnittdarstellung entlang der Schnittebene Vi-VI in Fig. 5,
- Fig. 7:: eine Fig. 5 entsprechende Seitenansicht mit aufgeschnitten dargestelltem Getriebehalter,
- Fig. 8:: eine perspektivische Darstellung eines Getriebehalters gemäß eines zweiten Ausführungsbeispiels eines erfindungsgemäßen Längseinstellers,
- Fig. 9:: eine Ansicht von unten auf den Getriebehalter von Fig. 8 sowie ein in dem Getriebehalter angeordnetes Getriebe,
- Fig. 10:: eine Seitenansicht mit aufgeschnitten dargestelltem Getriebehalter von Fig. 8,
- Fig. 11:: eine perspektivische Darstellung eines Getriebehalters gemäß eines dritten Ausführungsbeispiels eines erfindungsgemäßen Längseinstellers, und
- Fig. 12:: eine Schnittdarstellung durch den Getriebehalter mit Getriebe und Spindel gemäß des dritten Ausführungsbeispiels des erfindungsgemäßen Längseinstellers.

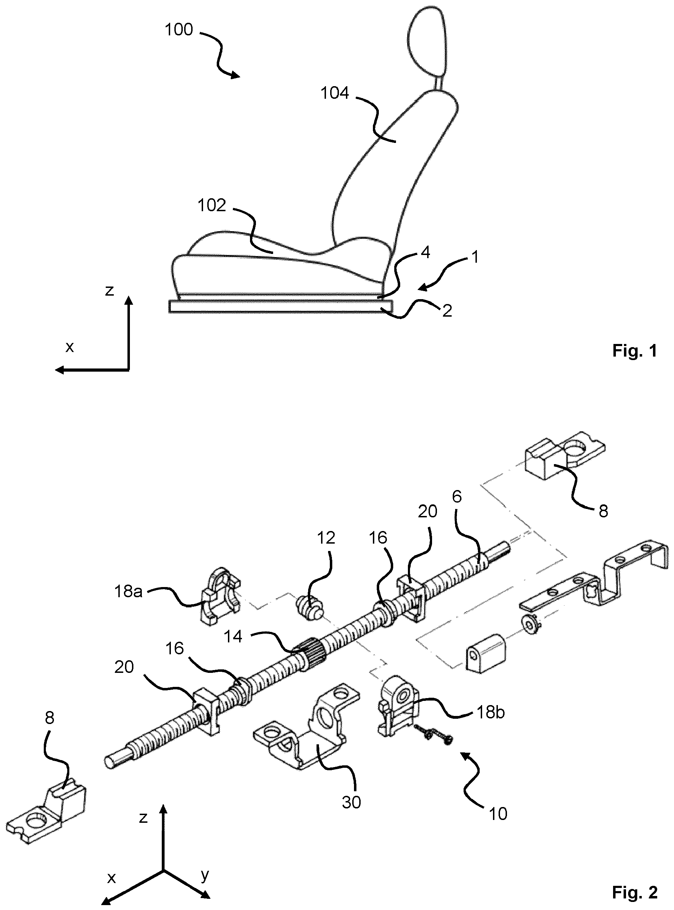

Der in Fig. 1 schematisch dargestellte Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Lehne 104 und wie üblich in Fahrtrichtung ausgerichtet ist. Der erfindungsgemäße Fahrzeugsitz 100 kann jedoch auch in abweichender Ausrichtung, beispielsweise quer zur Fahrtrichtung verbaut werden.

Der Fahrzeugsitz 100 für ein Kraftfahrzeug weist ein Sitzteil 102 und die relativ zum Sitzteil 102 in ihrer Neigung einstellbare Lehne 104 auf. Zur Einstellung einer Sitzlängsposition des Fahrzeugsitzes 100 ist der Fahrzeugsitz 100 mit einem Längseinsteller 1 verbunden, wobei der Längseinsteller 1 mit einer Fahrzeugstruktur verbindbar ist.

Der Längseinsteller 1 des Fahrzeugsitzes 100 in einem Kraftfahrzeug dient zur motorischen Längseinstellung, d.h. der Einstellung der Sitzlängsposition, des Fahrzeugsitzes 100. Auf jeder Fahrzeugsitzseite weist der Längseinsteller 1 eine mit der Fahrzeugstruktur zu verbindende erste Schiene 2 und eine mit der weiteren Sitzstruktur des Fahrzeugsitzes 100 verbundene zweite Schiene 4 auf. Auf jeder Fahrzeugsitzseite umgreifen die beiden Schienen 2, 4 einander wechselseitig unter Bildung eines Schienenprofils und sind relativ zueinander in Längsrichtung x beweglich.

Fig. 2 zeigt eine Explosionsdarstellung eines gattungsgemäßen Längseinstellers 1. Zum Antrieb der Relativbewegung der beiden Schienen 2, 4 ist ein Getriebe 10 vorgesehen, welches wenigstens weitgehend innerhalb des Schienenprofils angeordnet ist. Der Längseinsteller 1 weist eine, parallel zur Längsrichtung x angeordnete, Spindel 6 auf, welche mittels Spindelhaltern 8 relativ zur ersten Schiene 2 fixiert gehalten ist. Das Getriebe 10 weist eine Spindelmutter 14, eine mit der Spindelmutter 14 in Getriebeverbindung stehende Schnecke 12, ein zweiteiliges Getriebegehäuse 18, zwei Lagerbuchsen 16 und zwei Puffer 20 auf. Das Getriebe 10 ist mittels der Spindelmutter 14 entlang der Spindel 6 verfahrbar. Das an sich bekannte Funktionsprinzip des Getriebes 10 ist in der DE 103 58 586 A1 beschrieben, deren diesbezüglicher Offenbarungsgehalt ausdrücklich einbezogen wird.

Die Spindelmutter 14 weist ein Innengewinde auf, mittels dessen sie auf die ein Außengewinde aufweisende Spindel 6 aufgeschraubt ist. Die Spindelmutter 14 weist ferner eine Außenverzahnung auf, in welche die senkrecht zur Spindel 6 angeordnete Schnecke 12 eingreift. In Längsrichtung x vor und hinter der Spindelmutter 14 ist je eine der Lagerbuchsen 16 angeordnet, gegebenenfalls unter Zwischenlage eines Dämpfungsringes. Die beiden Gehäuseteile 18a, 18b sind unter Bildung des Getriebegehäuses 18 miteinander verbunden, beispielsweise verschraubt. Das Getriebegehäuse 18 nimmt die Schnecke 12, die Spindelmutter 14, gegebenenfalls die Dämpfungsringe und wenigstens teilweise die Lagerbuchsen 16 auf. Das Getriebegehäuse 18 lagert die Schnecke 12 drehbar um eine zur Spindel 6 senkrechte Drehachse, gegebenenfalls unter Zwischenlage von weiteren Lagerbuchsen.

Das Getriebegehäuse 18 ist unter Zwischenlage der Puffer 20 in Längsrichtung x vor und hinter dem Getriebegehäuse 18 im Getriebehalter 30 gelagert. Der Getriebehalter 30 weist näherungsweise eine U-Form mit abgewinkelten Endabschnitten auf. Die Lagerbuchsen 16 lagern das Getriebegehäuse 18 sowohl im Getriebehalter 30 als auch relativ zur Spindel 6. Der Getriebehalter 30 ist fest mit der zweiten Schiene 4 verbunden, beispielsweise verschraubt. Die Schnecke 12 ragt aus dem Getriebegehäuse 18 mit einem Wellenstummel heraus, welcher dem Anschluss eines antreibenden Motors dient. Dieser nicht näher dargestellte Motor zum Antrieb des Getriebes 10 ist an der zweiten Schiene 4 gelagert oder, insbesondere wenn ein gemeinsamer Motor für beide Fahrzeugsitzseiten vorgesehen ist, vorzugsweise an einer Querverbindung zwischen den beiden zweiten Schienen 4 angeordnet.

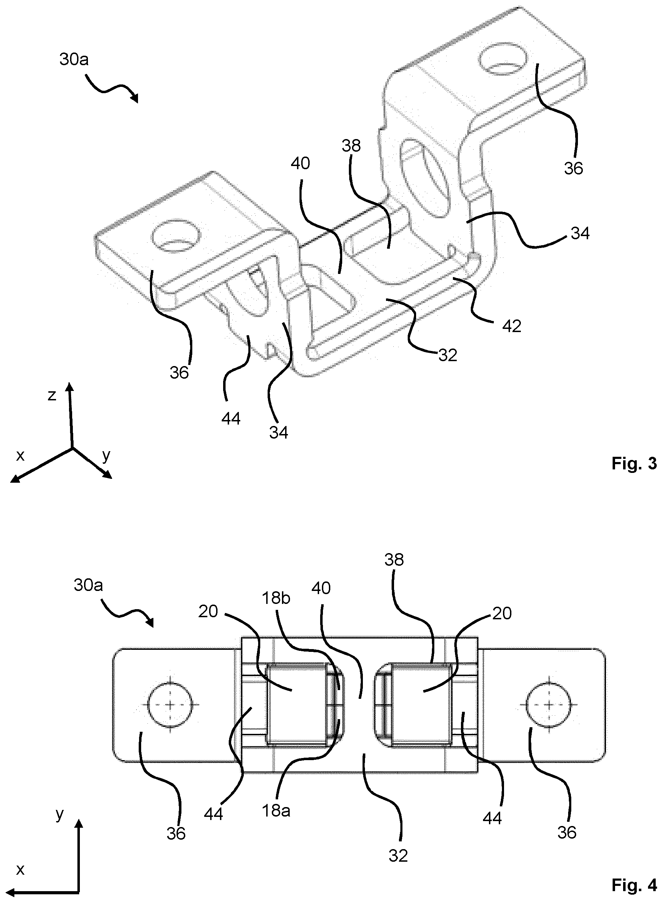

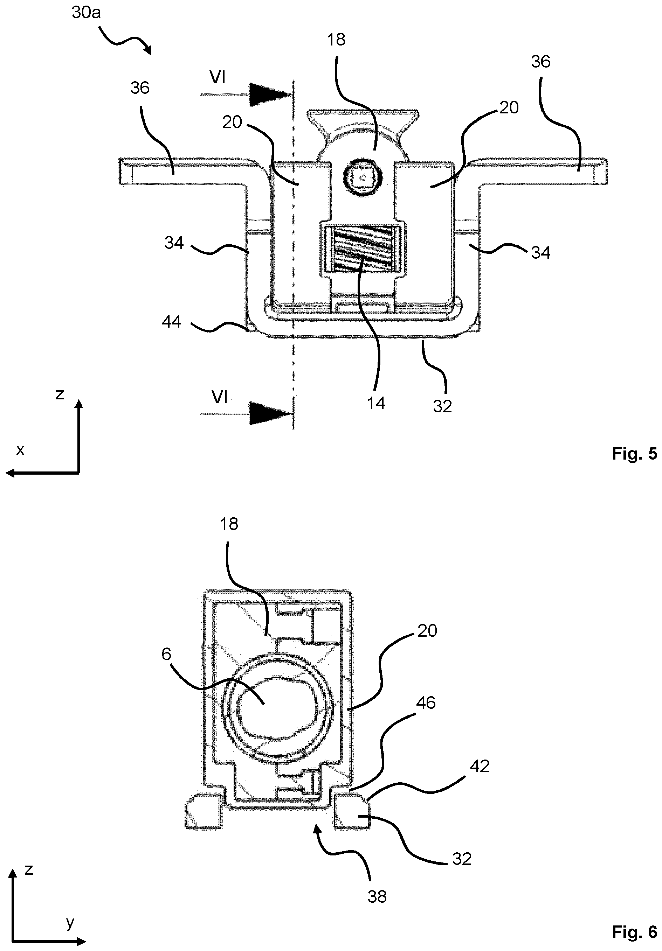

Ein Getriebehalter 30a des erfindungsgemäßen Längseinstellers 1 gemäß eines ersten Ausführungsbeispiels entspricht im Wesentlichen dem in Fig. 2 gezeigten Getriebehalter 30 sofern nachfolgend nicht abweichend beschrieben. Der Getriebehalter 30a ist in den Figuren 3 bis 7 gezeigt.

Der Getriebehalter 30a ist im Wesentlichen U-förmig ausgestaltet. Der Getriebehalter 30a weist zwei in Längsrichtung x gegenüberliegend angeordnete Schenkel 34 auf. Von den beiden Schenkeln 34 steht jeweils ein im Wesentlichen horizontal verlaufender Befestigungsschenkel 36 ab. Der Getriebehalter 30a ist mit den beiden Befestigungsschenkeln 36 mit der zweiten Schiene 4 verbindbar, insbesondere verschraubbar. Die beiden Schenkel 34 des Getriebehalters 30a sind mittels einer im Wesentlichen horizontal verlaufenden Basis 32 miteinander verbunden.

Die Basis 32 weist wenigstens eine Ausnehmung 38, vorliegend zwei Ausnehmungen 38, auf. Die beiden Ausnehmungen 38 sind durch einen in Querrichtung y orientierten Steg 40 voneinander getrennt.

Die Basis 32 weist an ihren, in Längsrichtung x betrachtet, seitlichen Rändern eine Fase 42 auf. Der Getriebehalter 30a kann im Bereich der Basis 32 eine reduzierte Dicke aufweisen.

Der Getriebehalter 30a kann aus einem Metallblech, insbesondere einem Stahlblech, als Stanz-Biegeteil gefertigt sein. So sind die beiden Schenkel 34 an den beiden Enden gegenüber der Basis 32 um etwa 90° nach oben gebogen. Die beiden Befestigungsschenkel 36 sind an den jeweils der Basis 32 gegenüberliegenden Enden der Schenkel 34 um etwa 90° voneinander weg umgebogen. Die Schenkel 34 weisen im Bereich der Ausnehmungen 38 jeweils einen Abschnitt 44 auf, welcher freigestanzt ist und während dem Einbringen der Biegung zwischen Basis 32 und dem jeweiligen Schenkel 34 nicht verbogen wird, sondern seinen geraden Verlauf relativ zum Schenkel 34 beibehält. Nach der Biegung des Schenkels 34 weist der Abschnitt 44 einen vertikalen Verlauf auf. Der Abschnitt 44 ist demnach nicht verbogen, sondern lediglich um ca. 90° verschwenkt. Die Basis 32 weist vorliegend eine H-Form auf, wobei jeweils zwei der parallel orientierten Enden der H-Form in die vertikal verlaufenden Schenkel 34 übergehen.

Das Getriebegehäuse 18 kann in einem mittleren Bereich eine Aussparung aufweisen, in welcher der Steg 40 in montiertem Zustand aufnehmbar ist. Das Getriebegehäuse 18 kann eine an die H-Form der Basis 32 angepasste Form aufweisen, so dass das Getriebegehäuse 18 in die Ausnehmungen 38 der Basis 32 eintritt. In Vertikalrichtung z oberhalb der in Querrichtung y äußeren Bereiche der Basis 32 ist zwischen der Basis 32 und dem Getriebegehäuse 18 oder den Puffern 20 ein Spalt 46 vorgesehen, welcher einem Toleranzausgleich dient.

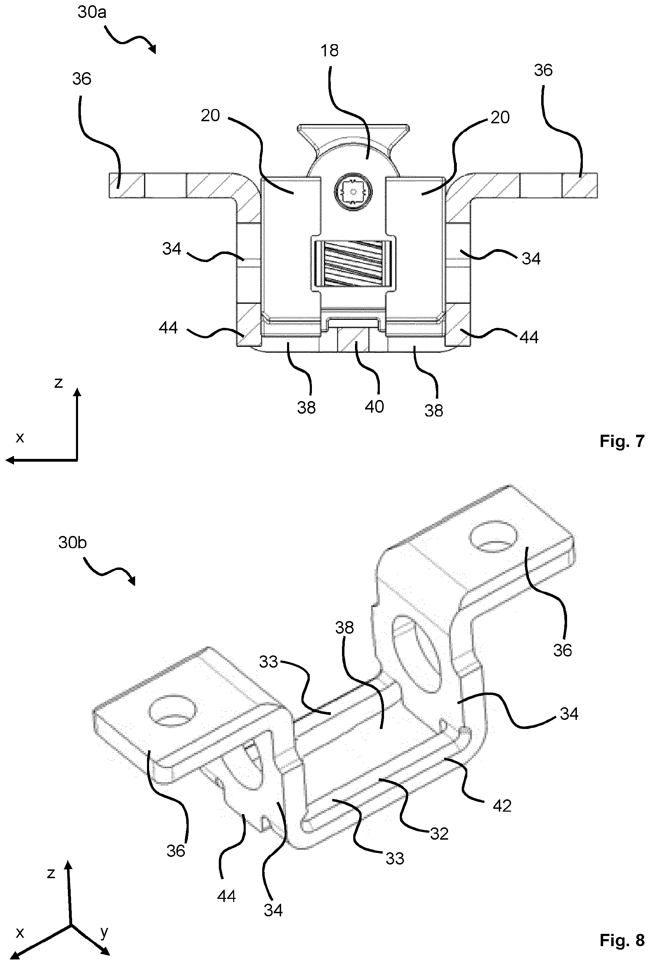

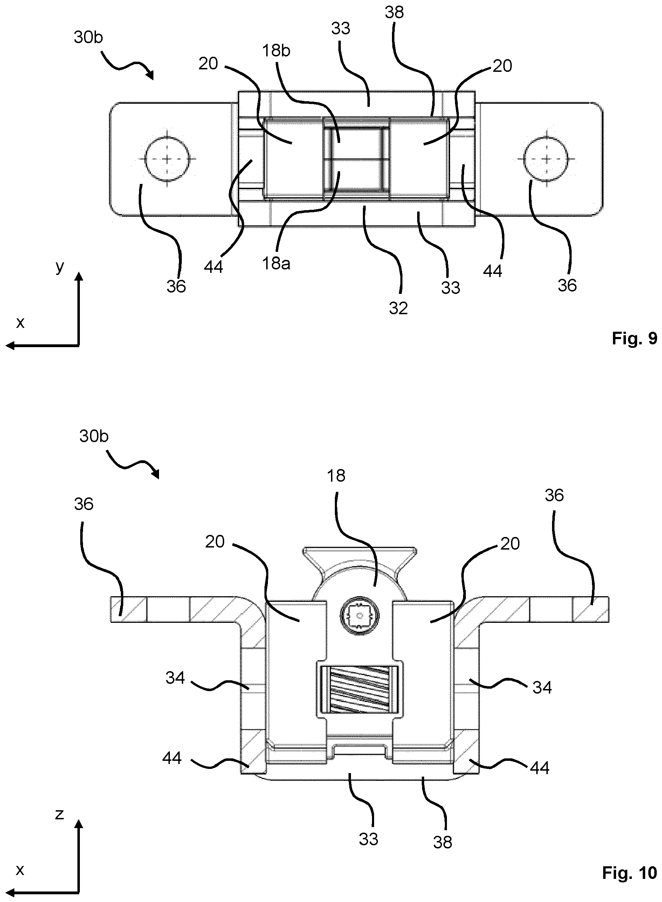

Die Figuren 8 bis 10 zeigen verschiedene Darstellungen eines Getriebehalters 30b eines erfindungsgemäßen Längseinstellers 1 gemäß eines zweiten Ausführungsbeispiels. Der Getriebehalter 30b des erfindungsgemäßen Längseinstellers 1 gemäß des zweiten Ausführungsbeispiels entspricht im Wesentlichen dem in den Figuren 3 bis 7 gezeigten Getriebehalter 30a gemäß des ersten Ausführungsbeispiels, sofern nachfolgend nicht abweichend beschrieben.

Der Getriebehalter 30b ist im Wesentlichen U-förmig ausgestaltet. Der Getriebehalter 30b weist zwei in Längsrichtung x gegenüberliegend angeordnete Schenkel 34 auf. Von den beiden Schenkeln 34 steht jeweils ein im Wesentlichen horizontal verlaufender Befestigungsschenkel 36 ab. Der Getriebehalter 30b ist mit den beiden Befestigungsschenkeln 36 mit der zweiten Schiene 4 verbindbar, insbesondere verschraubbar. Die beiden Schenkel 34 des Getriebehalters 30b sind mittels einer im Wesentlichen horizontal verlaufenden Basis 32 miteinander verbunden.

Die Basis 32 weist genau eine Ausnehmung 38 auf. Die Ausnehmung 38 erstreckt sich im Wesentlichen über die gesamte Erstreckung der Basis 32 zwischen den beiden Schenkeln 34. Die Ausnehmung 38 ist parallel zur Längsrichtung x durch die Schenkel 34 begrenzt. Die Basis 32 ist vorliegend in zwei parallel verlaufende Brückenabschnitte 33, insbesondere parallel zur Längsrichtung x orientierter Brückenabschnitte 33, unterteilt. Die Ausnehmung 38 ist in Querrichtung y durch die beiden Brückenabschnitte 33 der Basis 32 begrenzt.

Die Basis 32, insbesondere die Brückenabschnitte 33 der Basis 32, weist an ihren, in Längsrichtung x betrachtet, seitlichen äußeren Rändern eine Fase 42 auf. Der Getriebehalter 30b kann im Bereich der Basis 32 eine reduzierte Dicke aufweisen.

Der Getriebehalter 30b kann aus einem Metallblech, insbesondere einem Stahlblech, als Stanz-Biegeteil gefertigt sein. So sind die beiden Schenkel 34 an den beiden Enden gegenüber der Basis 32 um etwa 90° nach oben gebogen. Die beiden Befestigungsschenkel 36 sind an den jeweils der Basis 32 gegenüberliegenden Enden der Schenkel 34 um etwa 90° voneinander weg umgebogen. Die Schenkel 34 weisen im Bereich der Ausnehmungen 38 jeweils einen Abschnitt 44 auf, welcher freigestanzt ist und während dem Einbringen der Biegung zwischen Basis 32 und dem jeweiligen Schenkel 34 nicht verbogen wird, sondern seinen geraden Verlauf relativ zum Schenkel 34 beibehält. Nach der Biegung des Schenkels 34 weist der Abschnitt 44 einen vertikalen Verlauf auf. Der Abschnitt 44 ist demnach nicht verbogen, sondern lediglich um ca. 90° verschwenkt.

Das Getriebegehäuse 18 kann in einem mittleren Bereich eine Aussparung aufweisen. Das Getriebegehäuse 18 kann in die Ausnehmungen 38 der Basis 32 eintreten. In Vertikalrichtung z oberhalb der in Querrichtung y äußeren Bereiche der Basis 32 ist zwischen der Basis 32 und dem Getriebegehäuse 18 oder zwischen der Basis 32 und den Puffern 20 ein Spalt 46 vorgesehen, welcher einem Toleranzausgleich dient.

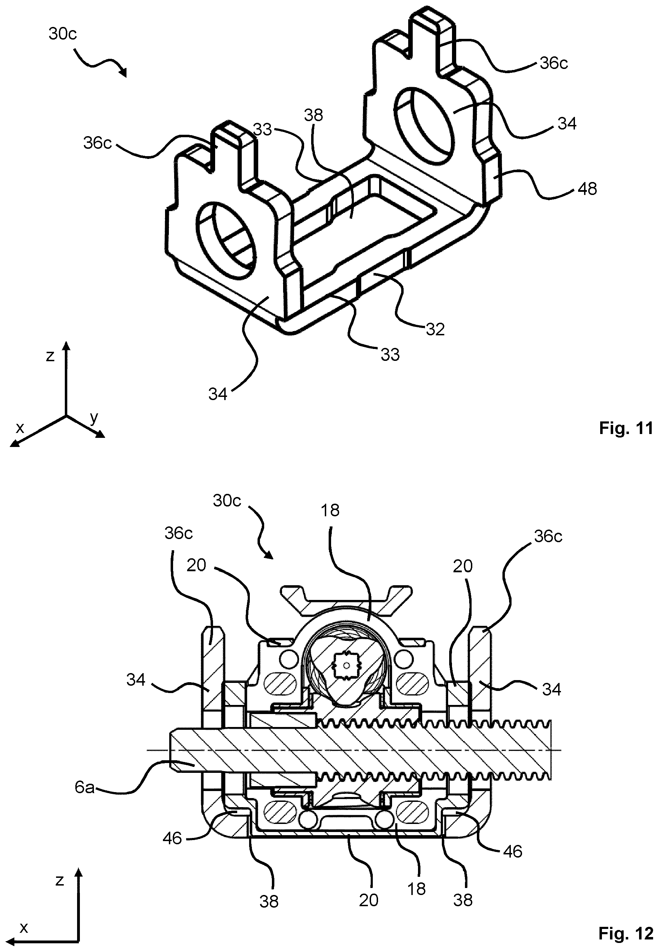

Die Figuren 11 und 12 zeigen verschiedene Darstellungen eines Getriebehalters 30c eines erfindungsgemäßen Längseinstellers 1 gemäß eines dritten Ausführungsbeispiels. Der Getriebehalter 30c des erfindungsgemäßen Längseinstellers 1 gemäß des dritten Ausführungsbeispiels entspricht im Wesentlichen dem in den Figuren 8 bis 10 gezeigten Getriebehalter 30b gemäß des zweiten Ausführungsbeispiels, sofern nachfolgend nicht abweichend beschrieben.

Der Getriebehalter 30c ist im Wesentlichen U-förmig ausgestaltet. Der Getriebehalter 30c weist zwei in Längsrichtung x gegenüberliegend angeordnete Schenkel 34 auf. Von den beiden Schenkeln 34 steht jeweils ein im Wesentlichen vertikal abstehender Befestigungsabschnitt 36c ab. Der Getriebehalter 30c ist mit den beiden Befestigungsabschnitten 36c mit der zweiten Schiene 4 verbindbar, insbesondere vernietbar. Zur Befestigung des Getriebehalters 30c an der zweiten Schiene 4 sind die Befestigungsabschnitte 36c durch kooperierende Öffnungen in der zweiten Schiene 4 hindurchführbar und auf einer dem Getriebegehäuse 18 gegenüberliegenden Seite der zweiten Schiene 4 durch Umformung vernietbar. Die beiden Schenkel 34 des Getriebehalters 30c weisen seitliche Vorsprünge 48 auf, welche in entsprechende Ausnehmungen in vertikal verlaufenden Wandabschnitten der zweiten Schiene 4 aufnehmbar sind. Die beiden Schenkel 34 des Getriebehalters 30c sind mittels einer im Wesentlichen horizontal verlaufenden Basis 32 miteinander verbunden. Die beiden Schenkel 34 sind über ihre gesamte Breite um ca. 90° relativ zur Basis 32 umgebogen.

Die Basis 32 weist genau eine Ausnehmung 38 auf. Die Ausnehmung 38 ist parallel zur Längsrichtung x begrenzt. Die Basis 32 weist zwei parallel verlaufende Brückenabschnitte 33, insbesondere parallel zur Längsrichtung x orientierter Brückenabschnitte 33, auf. Die Ausnehmung 38 ist in Querrichtung y durch die beiden Brückenabschnitte 33 der Basis 32 begrenzt.

Die Basis 32, insbesondere die Brückenabschnitte 33 der Basis 32, kann an ihren, in Längsrichtung x betrachtet, seitlichen äußeren Rändern eine Fase 42 aufweisen. Der Getriebehalter 30c kann im Bereich der Basis 32 eine reduzierte Dicke aufweisen. Der Getriebehalter 30c kann aus einem Metallblech, insbesondere einem Stahlblech, als Stanz-Biegeteil gefertigt sein. So sind die beiden Schenkel 34 an den beiden Enden gegenüber der Basis 32 um etwa 90° nach oben gebogen.

Das Getriebegehäuse 18 kann in einem mittleren Bereich eine Aussparung aufweisen. Das Getriebegehäuse 18 kann in die Ausnehmungen 38 der Basis 32 eintreten. In Vertikalrichtung z oberhalb der äußeren Bereiche der Basis 32 ist zwischen der Basis 32 und dem Getriebegehäuse 18 oder zwischen der Basis 32 und den Puffern 20 ein Spalt 46 vorgesehen, welcher einem Toleranzausgleich dient. Fig. 12 zeigt den Getriebehalter 30c mit dem Getriebe 10 und einer Spindel 6a gemäß des dritten Ausführungsbeispiels des erfindungsgemäßen Längseinstellers 1 in der zweiten Variante mit drehbar angetriebener Spindel 6a. Der gezeigte Getriebehalter 30c ist jedoch ausdrücklich auch bei einem Längseinstellers 1 der ersten Variante mit feststehender Spindel einsetzbar.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Längseinsteller
- 2: erste Schiene
- 4: zweite Schiene
- 6: Spindel
- 6a: Spindel
- 8: Spindelhalter
- 10: Getriebe
- 12: Schnecke
- 14: Spindelmutter
- 16: Lagerbuchse
- 18: Getriebegehäuse
- 18a: Gehäuseteil
- 18b: Gehäuseteil
- 20: Puffer
- 30: Getriebehalter
- 30a: Getriebehalter
- 30b: Getriebehalter
- 30c: Getriebehalter
- 32: Basis
- 33: Brückenabschnitt
- 34: Schenkel
- 36: Befestigungsschenkel
- 36c: Befestigungsabschnitt
- 38: Ausnehmung
- 40: Steg
- 42: Fase
- 44: Abschnitt
- 46: Spalt
- 48: Vorsprung
- 100: Fahrzeugsitz
- 102: Sitzteil
- 104: Lehne

- x: Längsrichtung
- y: Querrichtung
- z: Vertikalrichtung

## Patentansprüche

1. Längseinsteller (1) für einen Fahrzeugsitz (100), insbesondere Kraftfahrzeugsitz, aufweisend eine erste Schiene (2), eine in der ersten Schiene (2) in einer Längsrichtung (x) verschieblich geführte zweite Schiene (4), eine zwischen der ersten Schiene (2) und der zweiten Schiene (4) angeordnete Spindel (6; 6a), und ein Getriebe (10), wobei das Getriebe (10) mit einem Gewinde der Spindel (6) in Eingriff ist und entlang der Spindel (6) bewegbar ist, oder das Getriebe (10) relativ zur Spindel (6a) ortsfest angeordnet ist und die Spindel (6a) mittels des Getriebes (10) antreibbar ist, wobei das Getriebe (10) mittels eines im Wesentlichen U-förmigen Getriebehalters (30a, 30b, 30c) an der zweiten Schiene (4) befestigt ist, wobei der Getriebehalter (30a, 30b, 30c) wenigstens zwei in Längsrichtung (x) gegenüberliegend angeordnete Schenkel (34) aufweist, wobei der Getriebehalter (30a, 30b, 30c) in einer die beiden Schenkel (34) verbindenden und horizontal verlaufenden Basis (32) wenigstens eine Ausnehmung (38) aufweist,
**dadurch gekennzeichnet, dass**
ein das Getriebe (10) umschließendes Getriebegehäuse (18) wenigstens abschnittsweise in die wenigstens eine Ausnehmung (38) hineinragt, wobei in Vertikalrichtung (z) oberhalb äußerer Bereiche der Basis (32) zwischen der Basis (32) und dem Getriebegehäuse (18) ein Spalt (46) vorgesehen ist.

2. Längseinsteller (1) gemäß Anspruch 1, wobei wenigstens ein Puffer (20) auf ein Getriebegehäuse (18) des Getriebes (10) aufgesteckt ist, wobei in Vertikalrichtung (z) oberhalb der äußeren Bereiche der Basis (32) zwischen der Basis (32) und dem Puffer (20) der Spalt (46) vorgesehen ist.

3. Längseinsteller (1) gemäß Anspruch 2, wobei der wenigstens eine Puffer (20) abschnittsweise in die wenigstens eine Ausnehmung (38) hineinragt.

4. Längseinsteller (1) gemäß einem der Ansprüche 1 bis 3, wobei der Getriebehalter (30a) in der Basis (32) zwei Ausnehmungen (38) aufweist.

5. Längseinsteller (1) gemäß Anspruch 4, wobei die zwei Ausnehmungen (38) mittels eines Stegs (40) voneinander getrennt sind.

6. Längseinsteller (1) gemäß Anspruch 5, wobei der Steg (40) in einem rechten Winkel windschief zu einer Drehachse der Spindel (6; 6a) verläuft.

7. Längseinsteller (1) gemäß einem der Ansprüche 4 bis 6, wobei zwei Puffer (20) parallel zur Axialrichtung der Spindel (6; 6a) auf das Getriebegehäuse (18) aufgesteckt sind, und insbesondere jeweils ein Puffer (20) abschnittsweise in jeweils eine Ausnehmung (38) hineinragt.

8. Längseinsteller (1) gemäß einem der Ansprüche 1 bis 7, wobei die Schenkel (34) im Bereich der wenigstens einen Ausnehmung (38) jeweils einen Abschnitt (44) aufweisen.

9. Längseinsteller (1) gemäß Anspruch 8, wobei die Abschnitte (44) freigestanzt sind.

10. Längseinsteller (1) gemäß Anspruch 9, wobei die Abschnitte (44) einen geraden Verlauf relativ zum jeweiligen Schenkel (34) aufweisen.

11. Längseinsteller (1) gemäß Anspruch 10, wobei die Abschnitte (44) einen Winkel von 90° relativ zur Basis (32) aufweisen.

12. Längseinsteller (1) gemäß einem der Ansprüche 1 bis 11, wobei der Getriebehalter (30b, 30c) in der Basis (32) genau eine Ausnehmung (38) aufweist und die Basis (32) durch die Ausnehmung (38) in zwei parallel verlaufende Brückenabschnitte (33) unterteilt ist.

13. Längseinsteller (1) gemäß Anspruch 12, wobei die Ausnehmung (38) in Querrichtung (y) durch die beiden Brückenabschnitte (33) der Basis (32) begrenzt ist.

14. Längseinsteller (1) gemäß Anspruch 13, wobei die Basis (32), insbesondere die Brückenabschnitte (33) der Basis (32), an ihren, in Längsrichtung (x) betrachtet, seitlichen äußeren Rändern je eine Fase (42) aufweist.

15. Fahrzeugsitz (100), insbesondere Kraftfahrzeugsitz, wobei der Fahrzeugsitz (100) zur Einstellung einer Sitzlängsposition einen Längseinsteller (1) gemäß einem der vorstehenden Ansprüche aufweist.

## Claims

1. Longitudinal adjuster (1) for a vehicle seat (100), in particular motor vehicle seat, having a first rail (2), a second rail (4) which is guided displaceably in a longitudinal direction (x) in the first rail (2), a spindle (6; 6a) which is arranged between the first rail (2) and the second rail (4), and a gear (10), wherein the gear (10) is in engagement with a thread of the spindle (6) and is movable along the spindle (6), or the gear (10) is arranged in a fixed position relative to the spindle (6a) and the spindle (6a) is drivable by the gear (10), wherein the gear (10) is fastened to the second rail (4) by a substantially U-shaped gear holder (30a, 30b, 30c), wherein the gear holder (30a, 30b, 30c) has at least two limbs (34) which are arranged opposite one another in the longitudinal direction (x), wherein the gear holder (30a, 30b, 30c) has at least one recess (38) in a base (32) connecting the two limbs (34) and running horizontally,
**characterized in that**
a gear housing (18) surrounding the gear (10) projects at least in sections into the at least one recess (38), wherein in the vertical direction (z) above outer regions of the base (32), a gap (46) is provided between the base (32) and the gear housing (18) .

2. Longitudinal adjuster (1) according to Claim 1, wherein at least one buffer (20) is plugged onto a gear housing (18) of the gear (10), wherein in the vertical direction (z) above the outer regions of the base (32), the gap (46) is provided between the base (32) and the buffer (20).

3. Longitudinal adjuster (1) according to Claim 2, wherein the at least one buffer (20) projects in sections into the at least one recess (38).

4. Longitudinal adjuster (1) according to one of Claims 1 to 3, wherein the gear holder (30a) has two recesses (38) in the base (32).

5. Longitudinal adjuster (1) according to Claim 4, wherein the two recesses (38) are separated from each other by a web (40).

6. Longitudinal adjuster (1) according to Claim 5, wherein the web (40) runs inclined at a right angle with respect to an axis of rotation of the spindle (6; 6a).

7. Longitudinal adjuster (1) according to one of Claims 4 to 6, wherein two buffers (20) are plugged onto the gear housing (18) parallel to the axial direction of the spindle (6; 6a), and in particular in each case one buffer (20) projects in sections into in each case one recess (38).

8. Longitudinal adjuster (1) according to one of Claims 1 to 7, wherein the limbs (34) each have a portion (44) in the region of the at least one recess (38).

9. Longitudinal adjuster (1) according to Claim 8, wherein the portions (44) are punched free.

10. Longitudinal adjuster (1) according to Claim 9, wherein the portions (44) have a rectilinear profile relative to the respective limb (34).

11. Longitudinal adjuster (1) according to Claim 10, wherein the portions (44) are at an angle of 90° relative to the base (32).

12. Longitudinal adjuster (1) according to one of Claims 1 to 11, wherein the gear holder (30b, 30c) has precisely one recess (38) in the base (32) and the base (32) is divided by the recess (38) into two bridge portions (33) running in parallel.

13. Longitudinal adjuster (1) according to Claim 12, wherein the recess (38) is delimited in the transverse direction (y) by the two bridge portions (33) of the base (32).

14. Longitudinal adjuster (1) according to Claim 13, wherein the base (32), in particular the bridge portions (33) of the base (32), each has/have a bevel (42) on its/their lateral outer edges, as viewed in the longitudinal direction (x).

15. Vehicle seat (100), in particular motor vehicle seat, wherein the vehicle seat (100) has a longitudinal adjuster (1) according to one of the preceding claims for adjusting a seat longitudinal position.

## Revendications

1. Dispositif de réglage longitudinal (1) pour un siège de véhicule (100), notamment un siège de véhicule automobile, présentant un premier rail (2), un deuxième rail (4) guidé de manière coulissante dans le premier rail (2) dans une direction longitudinale (x), une broche (6 ; 6a) agencée entre le premier rail (2) et le deuxième rail (4), et une transmission (10), la transmission (10) étant en prise avec un filetage de la broche (6) et étant mobile le long de la broche (6), ou la transmission (10) étant agencé de manière fixe par rapport à la broche (6a) et la broche (6a) pouvant être entraînée au moyen de la transmission (10), la transmission (10) étant fixée au deuxième rail (4) au moyen d'un support de transmission (30a, 30b, 30c) essentiellement en forme de U, le support de transmission (30a, 30b, 30c) présentant au moins deux branches (34) agencées en face l'une de l'autre dans la direction longitudinale (x), le support de transmission (30a, 30b, 30c) présentant au moins un évidement (38) dans une base (32) reliant les deux branches (34) et s'étendant horizontalement,
**caractérisé en ce**
**qu'**un carter de transmission (18) entourant la transmission (10) pénètre au moins par sections dans l'au moins un évidement (38), une fente (46) étant prévue dans la direction verticale (z) au-dessus de zones extérieures de la base (32) entre la base (32) et le carter de transmission (18).

2. Dispositif de réglage longitudinal (1) selon la revendication 1, dans lequel au moins un tampon (20) est enfiché sur un carter de transmission (18) de la transmission (10), la fente (46) étant prévue dans la direction verticale (z) au-dessus des zones extérieures de la base (32) entre la base (32) et le tampon (20).

3. Dispositif de réglage longitudinal (1) selon la revendication 2, dans lequel l'au moins un tampon (20) pénètre par sections dans l'au moins un évidement (38).

4. Dispositif de réglage longitudinal (1) selon l'une quelconque des revendications 1 à 3, dans lequel le support de transmission (30a) présente deux évidements (38) dans la base (32).

5. Dispositif de réglage longitudinal (1) selon la revendication 4, dans lequel les deux évidements (38) sont séparés l'un de l'autre au moyen d'une entretoise (40) .

6. Dispositif de réglage longitudinal (1) selon la revendication 5, dans lequel l'entretoise (40) s'étend de travers à angle droit par rapport à un axe de rotation de la broche (6 ; 6a).

7. Dispositif de réglage longitudinal (1) selon l'une quelconque des revendications 4 à 6, dans lequel deux tampons (20) sont enfichés sur le carter de transmission (18) parallèlement à la direction axiale de la broche (6 ; 6a), et notamment un tampon (20) respectif pénètre par sections dans un évidement (38) respectif.

8. Dispositif de réglage longitudinal (1) selon l'une quelconque des revendications 1 à 7, dans lequel les branches (34) présentent chacune une section (44) dans la zone de l'au moins un évidement (38).

9. Dispositif de réglage longitudinal (1) selon la revendication 8, dans lequel les sections (44) sont découpées librement.

10. Dispositif de réglage longitudinal (1) selon la revendication 9, dans lequel les sections (44) présentent un tracé rectiligne par rapport à la branche respective (34) .

11. Dispositif de réglage longitudinal (1) selon la revendication 10, dans lequel les sections (44) présentent un angle de 90° par rapport à la base (32).

12. Dispositif de réglage longitudinal (1) selon l'une quelconque des revendications 1 à 11, dans lequel le support de transmission (30b, 30c) présente exactement un évidement (38) dans la base (32) et la base (32) est divisée par l'évidement (38) en deux sections de pont (33) s'étendant parallèlement.

13. Dispositif de réglage longitudinal (1) selon la revendication 12, dans lequel l'évidement (38) est délimité dans la direction transversale (y) par les deux sections de pont (33) de la base (32).

14. Dispositif de réglage longitudinal (1) selon la revendication 13, dans lequel la base (32), notamment les sections de pont (33) de la base (32), présentent chacune un chanfrein (42) sur leurs bords extérieurs latéraux, vus dans la direction longitudinale (x).

15. Siège de véhicule (100), notamment siège de véhicule automobile, le siège de véhicule (100) présentant un dispositif de réglage longitudinal (1) selon l'une quelconque des revendications précédentes pour régler une position longitudinale du siège.
